Europäisches Patentamt

European Patent Office

Office européen des brevets

(11) Veröffentlichungsnummer: **0 083 907**

**A1**

## (12) EUROPÄISCHE PATENTANMELDUNG

(21) Anmeldenummer: **82810550.2**

(22) Anmeldetag: **17.12.82**

(51) Int. Cl.³: **C 08 J 3/20**

(30) Priorität: **23.12.81 CH 8252/81**

(43) Veröffentlichungstag der Anmeldung:
**20.07.83 Patentblatt 83/29**

(84) Benannte Vertragsstaaten:
**CH DE FR GB IT LI NL**

(71) Anmelder: **CIBA-GEIGY AG**
**Patentabteilung Postfach**
**CH-4002 Basel(CH)**

(72) Erfinder: **Zwahlen, Günther**
**Landskronstrasse 12**
**CH-4143 Dornach(CH)**

(54) Verfahren zur Herstellung von Pigment- bzw. Farbstoffpräparaten.

㊆ Verfahren zur Herstellung eines Präparates durch Kneten eines Pigmentes oder eines polyamidlöslichen Farbstoffes in einer Lösung eines linearen Polyamides und durch Zerlegen der Knetmasse, dadurch gekennzeichnet, dass man als Lösungsmittel für das lineare Polyamid eine Lösung aus einem alkohollöslichen anorganischen Salz in einem Alkohol verwendet.

Die nach diesem Verfahren hergestellten Präparate eignen sich zur Massefärbung von linearen Polyamiden.

EP 0 083 907 A1

3-13724 /+

Verfahren zur Herstellung von Pigment- bzw. Farbstoffpräparaten

Die Erfindung betrifft ein Verfahren zur Herstellung von Pigment- bzw.
Farbstoffpräparaten für die Massefärbung von linearen Polyamiden und
die nach diesem Verfahren hergestellten Präparate.

Polyamid- Pigment- bzw. Polyamid-Farbstoffpräparate lassen sich
herstellen, indem man ein Pigment oder einen polyamidlöslichen Farbstoff mit einer Lösung eines Polyamides knetet.Dieses Knetverfahren
erfordert ein Lösungsmittel, welches das Trägerharz löst, und das
auf einfache Weise aus dem Polyamid, resp. Polyamid-Präparat wieder
entfernt werden kann. Das Lösungsmittel sollte deshalb Polyamid möglichst bei Temperaturen unter 100°C lösen und vorzugsweise mindestens
teilweise wasserlöslich sein, um eine Zerlegung der Knetmasse und
leichte Entfernung des Lösungsmittels mit Wasser am Ende des Prozesses
zu ermöglichen, und es muss ausserdem chemisch inert gegenüber den
einzelnen Komponenten der Knetmasse und dem Werkstoff der verwendeten
Apparaturen sein. Gerade bei linearen Polyamiden ist aber die Auswahl
an geeigneten Lösungsmitteln gering. Zur Herstellung von Polyamid-
Pigmentpräparaten beschreiben die CH-PS 308,532 und die
GB-PS 944,759 die Verwendung von Ameisensäure als Lösungsmittel für
das Polyamid. Nun ist Ameisensäure korrosiv und schafft arbeitshygienische, ökologische und toxikologische Probleme. Andere
bekannte Lösungsmittel, wie beispielsweise γ-Butyrolacton, erfordern
hohe Arbeitstemperaturen und belasten das Pigment bzw. den Farbstoff,
oder lösen das Polyamid nur unter erhöhtem Druck, wie beispielsweise
Methanol, und erschweren dadurch einen Knetprozess erheblich, oder

- 2 -

sind sehr teuer, wie z.B. Trifluoräthanol. Verwendet man jedoch eine organotrope Salz/Alkohol-Lösung als Lösungsmittel, so lassen sich unter Umgehung der genannten Nachteile Polyamid-Pigmentpräparate herstellen, die den höchsten Qualitätsanforderungen zu genügen vermögen.

Die Erfindung betrifft somit ein Verfahren zur Herstellung eines Präparates durch Kneten eines Pigmentes oder eines polyamidlöslichen Farbstoffes in einer Lösung eines linearen Polyamides und durch Zerlegen der Knetmasse, dadurch gekennzeichnet, dass man als Lösungsmittel für das lineare Polyamid eine Lösung aus einem alkohollöslichen anorganischen Salz in einem Alkohol verwendet.

Als alkohollösliche anorganische Salze eignen sich jene, deren Lösungen Polyamide zu lösen vermögen. Zudem bevorzugt man solche Salze, die leicht zugänglich und technisch von Interesse sind. So verwendet man als Salze vor allem Ammonium-, Alkali- oder Erdalkalihalogenide oder -rhodanide, wie Calciumchlorid, Kaliumrhodanid, Natriumrhodanid oder Ammoniumrhodanid. Von besonderem Interesse sind Calciumchlorid, Ammonium- oder Natriumrhodanid. Aber auch Salze ausgewählter Metalle anderer Gruppen des periodischen Systems sind geeignet, wie z.B. $FeCl_3$, $ZnCl_2$ oder $SnCl_2$.

Als Alkohole kommen sowohl mono- wie polyfunktionelle Alkohole in Betracht. Geeignete monofunktionelle Alkohole sind beispielsweise aliphatische Alkohole mit 1 bis 6 C-Atomen, wie Methanol, Aethanol, n-Propanol, Isopropanol, n-Butanol, Isobutanol, sek.-Butanol, tert.-Butanol, n-Pentanol, tert.-Amylalkohol, n-Hexanol, cycloaliphatische Alkohole mit 5 bis 7 C-Atomen, wie Cyclohexanol und aromatische Alkohole, wie Benzylalkohol. Als polyfunktionelle Alkohole bevorzugt man Glykole, wie Aethylenglykol, 1,2-Propylenglykol oder Diäthylenglykol. Es können auch Mischungen der genannten Alkohole verwendet werden.

Bevorzugt verwendet man im erfindungsgemässen Verfahren monofunktionelle aliphatische Alkohole mit 1 bis 6 C-Atomen, insbesondere solche mit 1 bis 4-C-Atomen, vorzugsweise Aethanol und vor allem Methanol.

Lineare Polyamide, die im erfindungsgemässen Verfahren verwendet
werden können, sind beispielsweise solche, die aus ₹-Caprolactam
(Polyamid-6), aus ѡ-Aminoundecansäure (Polyamid-11), aus
ѡ-Laurinlactam (Polyamid-12), aus Hexamethylendiamin und Adipinsäure
(Polyamid-6,6) oder aus anderen aliphatischen oder auch aromatischen
Ausgangsstoffen herstellbar sind. Ferner kommen auch Mischpolyamide
in Betracht, beispielsweise aus ₹-Caprolactam, Hexamethylendiamin und
Adipinsäure.

Bevorzugt verwendet man Polyamid-6 oder Polyamid-6,6.

Pigmente, die im erfindungsgemässen Verfahren eingesetzt werden
können, sind beispielsweise anorganische, wie Russ, Metallpulver,
Titandioxyd, Eisenoxyde, Eisenoxyhydrate, Ultramarin, Cadmiumsulfide,
Cadmiumsulfoselenide, Molybdatorange oder Chromgelb, insbesondere aber
organische Pigmente, wie z.B. Azo-, Azomethin-, Anthrachinon-,
Phthalocyanin-, Perinon-, Perylentetracarbonsäurediimid-.
Dioxazin-, Iminoisoindolinon- oder Chinacridonpigmente.
Auch Metallkomplexe, beispielsweise von Azo-, Azomethin- oder Methinfarbstoffen mit Pigmentcharakter sind geeignet.

Als polyamidlösliche Farbstoffe eignen sich im erfindungsgemässen
Verfahren vorzugsweise Dispersionsfarbstoffe, insbesondere solche
der Anthrachinonreihe, beispielsweise Hydroxy-, Amino-, Alkylamino-,
Cyclohexylamino-, Arylamino-, Hydroxyamino- oder Phenylmercaptoanthrachinone, sowie Metallkomplexe von Azofarbstoffen, insbesondere
1:2-Chrom- oder Kobaltkomplexe von Monoazofarbstoffen.

Es können auch Gemische verschiedener Pigmente oder Farbstoffe
verwendet werden. Bei der Wahl der Pigmente oder Farbstoffe ist darauf
zu achten, dass sie den hohen Anforderungen an die Beständigkeit
bei den Verarbeitungsbedingungen der Polyamide genügen.

Das Mengenverhältnis zwischen Pigment bzw. Farbstoff und linearem Polyamid wird zweckmässig so gewählt, dass der Pigment- bzw. Farbstoffanteil im fertigen Präparat 5 bis 70, bevorzugt 10 bis 50 Gew.-% beträgt.

Ausser den erfindungsgemäss zu verwendenden Komponenten können weitere, im Präparat verbleibende Stoffe eingesetzt werden, wie Stabilisierungs- oder Füllstoffe. In der Regel sind jedoch solche Zusätze überflüssig.

Die mechanische Behandlung gemäss vorliegendem Verfahren kann auf Knetapparaten bekannter Konstruktion durchgeführt werden. Dabei kann man kontinuierlich oder diskontinuierlich arbeitende Maschinen einsetzen. Vorzugsweise verwendet man im erfindungsgemässen Verfahren diskontinuierlich arbeitende Knetapparate. Die Knetung kann man bei Temperaturen zwischen Raumtemperatur und Siedetemperatur des eingesetzten Lösungsmittels durchführen. Vorzugsweise arbeitet man bei Temperaturen unter 100°C, insbesondere bei 40 bis 100°C.

Das Mengenverhältnis zwischen alkohollöslichem Salz und Alkohol kann zwischen 5 Gew.-% Salz bezogen auf den Alkohol und dem Sättigungspunkt der Salz/Alkohollösung liegen, wobei der Sättigungspunkt von der Verfahrenstemperatur abhängig ist. Bevorzugt setzt man das alkohollösliche Salz in einer Menge von 15 bis 30 Gew.-% bezogen auf die Alkohollösung ein. Im Einzelfalle wird man beachten müssen, dass zum Erreichen eines ausreichenden Lösevermögens eine von der Art des Salzes und vom verwendeten Alkohol abhängige minimale Salzkonzentration erforderlich ist.

Das Mengenverhältnis zwischen der Salz/Alkohollösung und dem linearen Polyamid kann in weiten Grenzen variiert werden und ist insbesondere von der Arbeitstemperatur, der Leistungsfähigkeit des Knetapparates und von der Natur des Polyamides abhängig.

- 5 -

Vorzugsweise führt man den Knetprozess in Gegenwart von Mahlhilfsmitteln durch, die in der Salz/Alkohollösung unlöslich sind und sich
mit Wasser auswaschen lassen. Als Mahlhilfsmittel eignet sich
insbesondere Natriumchlorid. Das Mengenverhältnis zwischen Mahlhilfsmittel und Pigment bzw. Farbstoff kann in weiten Grenzen variiert
werden. Ein geringer Anteil an Mahlhilfsmittel, beispielsweise etwa
ein Fünftel der Pigmentmenge, führt zu relativ langen
Bearbeitungszeiten. Vorteilhaft verwendet man mindestens gleichviel
Gew.-Teile Mahlhilfsmittel oder ein Mehrfaches davon wie Pigment-
bzw. Farbstoff-Gew.-Teile. Die obere Grenze des Mahlhilfsmittelanteils hängt weitgehend von der Leistungsfähigkeit der verwendeten
Knetmaschine ab.

Die Knetmassen, in denen das Polyamid gelöst vorliegt, können zerlegt werden, indem man das Polyamid aus der hochviskosen, zähen Lösung ausfällt. Als Fällmittel verwendet man vorzugsweise Wasser.
Das Ausfällen kann aber auch durch Zusetzen von weiterem Alkohol erfolgen, da dadurch die Konzentration des anorganischen Salzes im
Alkohol soweit herabgesetzt werden kann, dass die Salz/Alkohol-Lösung
das Polyamid nicht mehr zu lösen vermag.

Es ist auch möglich, die Knetmassen zu zerlegen, indem das Metallsalz durch chemische Massnahmen in ein unlösliches Produkt übergeführt
wird, z.B. bei einer $ZnCl_2$/Alkohol-Lösung durch Zusatz von $Na_2CO_3$,
wodurch das unlösliche $ZnCO_3$ entsteht und der Knetmasse somit der
Lösevermittler entzogen wird.

Arbeitet man mit kontinuierlichen Maschinen, z.B. mit einem Knetextruder, wird das Extrudat vorteilhaft in viel Wasser aufgenommen und
durch mechanische Zerkleinerung in geeigneten Nassmühlen in eine
aufarbeitbare Suspension übergeführt.

Präparate, die nach dem erfindungsgemässen Verfahren in Pulverform anfallen, können durch Extrusion zu Granulaten umgeformt werden. Es ist möglich, während des Extrusionsprozesses den Pigment- oder Farbstoffanteil im Präparat durch Zugabe von Polyamid zu verringern und ferner die Farbnuance des Präparates mit andersfarbigen Präparaten zu verändern.

Die nach dem erfindungsgemässen Verfahren hergestellten Präparate eignen sich für die Massefärbung von linearen Polyamiden, wie sie oben beschrieben wurden. Sie eignen sich insbesondere für die Massefärbung von faserbildenden Polyamiden, vor allem von Polyamid-6 und Polyamid-6,6.

Die nach dem erfindungsgemässen Verfahren hergestellten Präparate zeichnen sich durch eine gute Verteilbarkeit in der Polyamidschmelze aus. In Granulatform sind sie abriebbeständig und ohne Schwierigkeiten dosierbar und pneumatisch förderbar.

Die zu färbenden Polyamide können zweckmässig in Form von Pulvern, Schnitzeln oder Granulaten mit dem Präparat vermischt werden. Dies wird beispielsweise durch Aufpudern der Polyamidteilchen mit dem fein verteilten Präparat mit oder ohne Haftmittel oder durch Heissbeschichtung oder durch Vermischen des Präparategranulates mit dem Polyamidgranulat oder durch Aufschmelzen des Präparategranulates in einem Injektionsextruder und Einspritzen in die zu färbende Polyamidschmelze erreicht. Das Verhältnis von Präparat zu Polyamid kann, je nach der gewünschten Farbstärke, innerhalb weiter Grenzen schwanken. Im allgemeinen empfiehlt sich die Verwendung von 0,01 bis 10, insbesondere 0,1 bis 5 Gewichtsteilen Präparat auf 100 Gewichtsteile Polyamid.

- 7 -

Die mit dem Präparat vermischten Polyamidteilchen werden nach
bekannten Verfahren im Extruder geschmolzen und zu verschiedenen
Formen, wie Platten, Folien oder insbesondere Fasern, gegossen bzw.
gepresst.

Die mit den erfindungsgemässen Präparaten gefärbten Polyamidgegenstände zeigen eine gleichmässige und intensive Färbung von guter
Lichtechtheit. Insbesondere erfüllen die Fasern ausserdem die an
die Gebrauchsechtheiten und physikalisch-technischen Eigenschaften
gestellten Anforderungen, wie beispielsweise an die Nass- und
Trockenreinigungsechtheiten, Reibechtheit, Dehnbarkeit, Reiss- und
Spleissfestigkeit.

Die folgenden Beispiele erläutern die Erfindung. Die Teile bedeuten
Gewichtsteile und die Prozente Gewichtsprozente.

Beispiel 1: In einem Labor-Kneter werden 70 Teile feinteiliges $\beta$-
Kupferphthalocyanin, 105 Teile Polyamid-6 von Faserqualität (grobes
Pulver mit Körnung <1 mm) und 126 T $CaCl_2$/Methanollösung, enthaltend
23 % $CaCl_2$, während 3 Stunden bei 40 bis 45° C geknetet. Innert 10
Minuten werden 150 Teile Methanol zugetropft, wobei die Knetmasse zerfällt und innert 15 Minuten einen feinteiligen Brei bildet. Dieser
wird in ca. 2000 Teilen Wasser aufgenommen und die Suspension nach
einem Durchgang durch eine Zahnkolloidmühle filtriert und mit Wasser
salz- und lösungsmittelfrei gewaschen. Der Filterkuchen wird im Vakuumschrank während 24 Stunden bei 100° C getrocknet. Man erhält ein
blaues pulveriges Präparat, enthaltend 40 % Pigment und 60 % Polyamid-
-6.

Nimmt man anstelle der $CaCl_2$/Methanollösung 150 T 25 %ige
$CaCl_2$/n-Butanollösung, so erhält man ebenfalls ein gutes Präparat.

- 8 -

Beispiel 2: 40 Teile rohes β-Kupferphthalocyanin, 40 Teile Polyamid-6 von Faserqualität (Pulver mit Körnung ⟨500 μm), 200 Teile
gemahlenes Natriumchlorid und 70 Teile $CaCl_2$/Methanol-Lösung,
enthaltend 23 % $CaCl_2$, werden in einem mit Rückflusskühler
versehenen Kneter während 6 Stunden bei Rückflusstemperatur
(∼60°C) geknetet. Durch Zugabe von 50 Teilen Wasser wird die Knetmasse zerlegt und in kurzer Zeit (5-10 Minuten) zu einem feinen
Granulat zerkleinert. Dieses wird in ca. 1000 Teilen Wasser aufgenommen,
die erhaltene Suspension filtriert, und der Filterkuchen mit Wasser
salz- und lösungsmittelfrei gewaschen. Das Produkt wird im Vakuumschrank bei 100°C während 24 Stunden getrocknet. Man erhält ein
blaues, pulveriges Präparat, enthaltend 50 % Pigment und 50 % Polyamid-6.

Beispiel 3: Verfährt man wie in Beispiel 1, verwendet aber anstelle
von 70 Teilen Kupferphathalocyanin 70 Teile Russ-Pigment
(Printex 35 ®, Degussa) und 140 Teile, statt 126 Teilen 23 %ige
$CaCl_2$/Methanollösung, so erhält man ein schwarzes Präparat, enthaltend
40 % Russ-Schwarz und 60 % Polyamid-6.

Beispiel 4: In einen Laborkneter lädt man 32 Teile rohes Indanthron
der α-Kristallmodifikation, 48 Teile Polyamid-6 von Faserqualität
(Körnung ⟨1 mm), 192 Teile gemahlenes Natriumchlorid,
25 Teile wasserfreies $CaCl_2$ und 75 Teile Methanol.

Man knetet 4 Stunden bei Rückflusstemperatur, zerlegt und granuliert
die Knetmasse durch Zugabe von 40 Teilen Wasser, suspendiert das
sehr feine Granulat in ca. 1000 Teilen Wasser, filtriert, wäscht mit
Wasser salz- und lösungsmittelfrei und trocknet 48 Stunden bei
100°C im Vakuum. Man erhält ein dunkelblaues Präparat, enthaltend 40 %
Indanthron und 60 % Polyamid-6.

Beispiel 5: 150 Teile einer Lösung aus 25 % NaSCN und 75 % Aethanol (techn., enthaltend 5 % Wasser), 65 Teile Polyamid-6 von Faserqualität (Körnung $\leq 0,5$ mm) und 43 Teile feinteiliges β-Kupferphthalocyanin werden während 4 Stunden bei 80 bis 85° C geknetet. Durch Zutropfen von 50 Teilen Wasser von 60° C wird die Knetmasse zerlegt, unter Kühlung 20 Minuten weitergeknetet, sodass ein feines feuchtes Pulver entsteht. Dieses wird analog Beispiel 1 zu einem pulverförmigen blauen Präparat aufgearbeitet, enthaltend 40 % Pigment und 60 % Polyamid-6.

Beispiel 6: 63,6 Teile Aethanol (techn., enthaltend 5 % Wasser), 27,3 Teile $NH_4SCN$, 40,8 Teile Polyamid-6 von Faserqualität (Körnung $\leq 0,5$ mm), 27,2 Teile chloriertes Kupferphthalocyanin C.I. Pigment Grün 7 und 163,2 Teile gemahlenes NaCl (Körnung $\leq 60$ µm) werden während 6 Stunden bei 80 bis 85° C geknetet. Durch Zugabe von 50 Teilen Wasser wird die Knetmasse zerlegt und unter Kühlung 15 Minuten weitergeknetet. Es entsteht ein feines Granulat, das analog Beispiel 1 aufgearbeitet wird. Man erhält ein pulverförmiges grünes Präparat, bestehend aus 40 % Pigment und 60 % Polyamid-6.

Beispiel 7: 84 Teile wasserfreies Methanol, 36 Teile $ZnCl_2$, 30 Teile Polyamid-6 von Faserqualität (Körnung $\leq 0,5$ mm), 20 Teile C.I. Pigment Rot 149 und 160 Teile gemahlenes NaCl (Körnung $\leq 60$ µm) werden bei 60 bis 65° C während 5 Stunden geknetet. Unter gleichzeitiger Kühlung werden 50 Teile Wasser zugesetzt. Innert weniger Minuten entsteht ein feinteiliger Brei, der mit 3000 Teilen Wasser aus dem Kneter gespült wird. Die erhaltene Suspension wird filtriert, mit Wasser salz- und lösungsmittelfrei gewaschen. Der Filterkuchen wird im Vakuumschrank bei 100° C während 48 Stunden getrocknet. Man erhält ein rotes pulverförmiges Präparat, bestehend aus 40 % Pigment und 60 % Polyamid-6.

Beispiel 8:   In einen Laborkneter lädt man 10 Teile rohes β-Kupfer-phthalocyanin, 15 Teile Polyamid-6 von Faserqualität (Körnung $\leq$0,5 mm), 60 Teile gemahlenes NaCl, 25 Teile CaCl$_2$ und 75 Teile Aethylengly-kol. Man knetet 6 Stunden bei 80 bis 85° C, zerlegt die Knetmasse durch Zugabe von 50 Teilen Wasser unter gleichzeitiger Kühlung, und arbeitet analog Beispiel 1 zu einem pulverförmigen blauen Präparat auf. Es besteht aus 40 % Pigment und 60 % Polyamid-6.

Beispiel 9:   60 Teile des Präparates aus Beispiel 2 und 90 Teile Polyamid-6 von Faserqualität (Körnung $\leq$1 mm) werden während 20 Minuten auf einem Turbulamischer gemischt, die Mischung auf einem 1-Wellen-Laborextruder zu einem Draht extrudiert (Extruder-Temperaturen 190 bis 240° C) und dieser zu zylindrischen Granulaten von 2 bis 3 mm Länge und 3 mm Durchmesser geschnitten. Man erhält ein Präparat in Granulatform, enthaltend 20 % Pigment und 80 % Polyamid-6.

Beispiel 10:

a) 50 Teile Präparat gemäss Beispiel 4 und 50 Teile Polyamid-6 von Faserqualität (Körnung $\leq$0,5 mm) werden während 20 Minuten auf einem Turbulamischer gemischt. Die Mischung wird auf einem 1-Wellen-Laborextruder zu einem Draht extrudiert (Extrudertemperaturen 210 bis 230° C). Der Draht wird zu zylindrischen Granulaten von 2 bis 3 mm Länge und 3 mm Durchmesser geschnitten. Man erhält ein dunkelblaues Präparat in Granulatform, enthaltend 20 % Pigment und 80 % Polyamid-6.

b) bis e)   Nimmt man anstelle des Präparates gemäss Beispiel 4 50 Teile Präparat gemäss Beispiel 5, 6, 7 oder 8, verfährt im übrigen wie beschrieben, so erhält man ein blaues, bzw. ein grünes oder rotes Präparat in Granulatform, enthaltend 20 % Pigment und 80 % Polyamid-6.

Beispiel 11:

a) 98 Teile Polyamid aus $\mathcal{E}$-Caprolactam (Polyamid-6) in Form von Schnitzeln werden mit 2 Teilen des gemäss Beispiel 1 erhaltenen blauen Präparates trocken aufgepudert. Die Schnitzel werden bei 290 bis 295° C in einem Extruder versponnen. Der erhaltene Faden weist eine gleichmässige blaue Färbung auf und enthält das Pigment in sehr guter Feinverteilung.

b) Nimmt man anstelle des blauen Präparates gemäss Beispiel 1 2 Teile des gemäss Beispiel 3 erhaltenen schwarzen Präparates, verfährt im übrigen analog zu Beispiel 11a,so erhält man einen gleichmässig schwarzgefärbten Faden, der das Pigment in guter Feinverteilung enthält.

Beispiel 12:

a) 96 Teile Polyamid-6 in Form von Schnitzeln werden mit 4 Teilen des gemäss Beispiel 9 erhaltenen Granulats vermischt und bei 290° C bis 295° C im Extruder versponnen. Der erhaltene Faden weist eine gleichmässig blaue Färbung auf und enthält das Pigment in hervorragender Feinverteilung.

b) bis f) Nimmt man anstelle des dunkelblauen Präparates gemäss Beispiel 9 4 Teile Präparat gemäss Beispiel 10a, 10b, 10c, 10d oder 10e, verfährt im übrigen wie beschrieben, so erhält man gleichmässig dunkelblau, bzw. blau, grün oder rot gefärbte Fäden, die das jeweilige Pigment in ausgezeichneter Feinverteilung enthalten.

Beispiel 13: Verfährt man analog zu Beispiel 11 und verwendet anstelle der Präparate gemäss Beispiel 1 bzw. 3 2 Teile des Präparates gemäss Beispiel 4, so erhält man ebenso einen gleichmässig gefärbten Faden, in dem das Pigment in ausgezeichneter Feinverteilung vorliegt.

0083907

- 12 -

Patentansprüche

1. Verfahren zur Herstellung eines Präparates durch Kneten eines Pigmentes oder eines polyamidlöslichen Farbstoffes in einer Lösung eines linearen Polyamides und durch Zerlegen der Knetmasse, dadurch gekennzeichnet, dass man als Lösungsmittel für das lineare Polyamid eine Lösung aus einem alkohollöslichen anorganischen Salz in einem Alkohol verwendet.

2. Verfahren gemäss Anspruch 1, dadurch gekennzeichnet, dass man als alkohollösliches anorganisches Salz Ammonium-, Alkali- oder Erdalkalihalogenide oder -rhodanide verwendet.

3. Verfahren gemäss Anspruch 1, dadurch gekennzeichnet, dass man als alkohollösliches anorganisches Salz Calciumchlorid, Ammonium- oder Natriumrhodanid verwendet.

4. Verfahren gemäss Anspruch 1, dadurch gekennzeichnet, dass man als Alkohol einen monofunktionellen aliphatischen Alkohol mit 1 bis 6 C-Atomen verwendet.

5. Verfahren gemäss Anspruch 1, dadurch gekennzeichnet, dass man als Alkohol Methanol verwendet.

6. Verfahren gemäss Anspruch 1, dadurch gekennzeichnet, dass man das alkohollösliche anorganische Salz in einer Menge von 15 bis 30 Gew.-% bezogen auf die Alkohollösung einsetzt.

7. Verfahren gemäss Anspruch 1, dadurch gekennzeichnet, dass man als lineares Polyamid ein Polyamid aus $\mathcal{E}$-Caprolactam oder ein Polyamid aus Hexamethylendiamin und Adipinsäure verwendet.

8. Verwendung der nach Anspruch 1 hergestellten Präparate zur Massefärbung von linearen Polyamiden.

9. Verwendung der nach Anspruch 1 hergestellten Präparate zur Massefärbung von faserbildenden Polyamiden.

10. Verwendung der nach Anspruch 1 hergestellten Präparate zur Massefärbung von Polyamid aus $\mathcal{E}$-Caprolactam.

**0083907**

Nummer der Anmeldung

EP 82 81 0550

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | CHEMICAL ABSTRACTS, Band 66, 1967, Seite 1146, Nr. 11577g, Columbus, Ohio, USA & CS - A - 117 740 (J. TRUBAC) 15.03.1966 * Zusammenfassung * | 1-10 | C 08 J 3/20 |
| Y | GB-A- 924 001 (CIBA) * Ansprüche * | 1-10 | |
| Y | CHEMICAL ABSTRACTS, Band 66, 1967, Seite 2813, Nr. 29230y, Columbus, Ohio, USA G.A. GAVRILOV et al.: "Solubility of polycaproamide in calcium chloridemethanol" & KHIM. VOLOKNA 1966(5), 19-20 * Zusammenfassung * | | |

**RECHERCHIERTE SACHGEBIETE (Int. Cl. 3)**

C 08 J 3

Der vorliegende Recherchenbericht wurde für alle Patentansprüche erstellt.

| Recherchenort | Abschlußdatum der Recherche | Prüfer |
|---|---|---|
| DEN HAAG | 27-04-1983 | LEROY ALAIN |